# FASCICULE DE BREVET EUROPEEN

(11) **EP 1 084 367 B1**
(45) Date de publication et mention de la délivrance du brevet: **07.05.2003**
(21) Numéro de dépôt: 99914630.1
(22) Date de dépôt: 20.04.1999
(51) Int. Cl.: F23D 3/24, F23D 3/02

(54) **BRULEUR CATALYTIQUE ET FLACON EQUIPE D'UN TEL BRULEUR**
KATALYTISCHER BRENNER UND MIT EINEM SOLCHEN BRENNER AUSGERÜSTETE FLASCHE
CATALYTIC AFTERBURNER AND BOTTLE EQUIPPED WITH SAME

(30) Priorité: 04.06.1998 FR 9807043
(43) Date de publication de la demande: 21.03.2001
(73) Titulaire: PRODUITS BERGER, 75116 Paris (FR)
(72) Inventeur: GOMEZ, Corinne, Les Marronniers, F-27400 Louviers (FR); LEHOUX, Jannick, F-27370 Thuit-Signol (FR)
(74) Mandataire: Rémont, Claude
(86) Numéro de dépôt international: FR9900937
(87) Numéro de publication internationale: WO99063267

(56) Documents cités:
- EP-A- 0 064 559
- EP-A- 0 277 875
- FR-A- 2 162 772
- FR-A- 2 530 144
- FR-A- 2 680 118

## Description

La présente invention concerne un brûleur à combustion catalytique en matière poreuse, comportant une cavité sensiblement axiale adaptée à recevoir une mèche destinée à amener au brûleur un liquide combustible qui pénètre dans les pores de ladite matière poreuse, ladite cavité débouchant à l'extrémité inférieure du brûleur et étant séparée de la surface supérieure du brûleur par une paroi, et ledit brûleur comportant une zone périphérique annulaire supportant un catalyseur et entourant une zone centrale sans catalyseur formant zone de vaporisation, la zone périphérique annulaire et la zone centrale étant situées dans la partie supérieure du brûleur

Un tel brûleur a été décrit par exemple dans le brevet FR-B-2 610 390 au nom de la demanderesse.

Le liquide combustible amené par la mèche pénètre dans les pores de la matière poreuse du brûleur. Une partie de ce liquide parvient dans la zone périphérique annulaire supportant le catalyseur et y subit une combustion catalytique qui maintient cette zone périphérique à une température élevée.

Une autre partie de ce liquide traverse la zone centrale du brûleur et y subit une vaporisation.

Il est recommandé de remettre régulièrement du liquide combustible dans le flacon équipé d'un tel brûleur. Toutefois, l'expérience montre que de nombreux utilisateurs oublient d'arrêter ce brûleur et le laissent fonctionner jusqu'à la consommation complète du liquide combustible.

Lorsqu'il n'y a plus de liquide combustible dans le flacon, la mèche sèche et l'extrémité supérieure de la mèche, emprisonnée dans la partie supérieure de la cavité du brûleur au contact des parois chaudes de cette cavité, tend à brûler en l'absence d'oxygène et à charbonner avec production de particules libres de carbone qui viennent boucher les pores du brûleur. Il en est de même pour les dernières quantités utilisables de liquide combustible véhiculées par la mèche à un débit décroissant, qui ne traversent plus les parois du brûleur et dont la combustion incomplète libère également des particules de carbone amorphe. Le brûleur perd ainsi son efficacité, devient inutilisable et doit être changé.

On connaît en outre, d'après le FR-B-2 483 782 ou le FR-A-2 530 144 au nom de la demanderesse, un brûleur sous la forme d'une pastille catalytique annulaire composée de matières inertes auxquelles est mélangé un catalyseur. Cette pastille est percée d'un trou axial dans lequel est engagée une chemise qui s'étend jusqu'à une mèche tubulaire et qui ne contient pas de catalyseur. A sa partie supérieure, la mèche tubulaire entoure la chemise sous la pastille annulaire. Une seconde mèche est disposée à l'intérieur de la mèche tubulaire et est engagée à l'intérieur de la chemise.

Un tel brûleur n'a jamais dépassé le stade du prototype, d'une part, du fait de sa complexité, d'autre part, du fait que les deux mèches ont tendance à charbonner rapidement au contact de la pastille catalytique annulaire portée à une température élevée.

Le but de l'invention est de remédier aux inconvénients du brûleur à combustion catalytique du type précité et de proposer un brûleur de ce type dans lequel la mèche ne risque pas de charbonner, même si un utilisateur oublie d'arrêter le brûleur et le laisse fonctionner jusqu'à consommation complète du liquide combustible contenu dans le flacon.

Suivant la présente invention, le brûleur à combustion catalytique du type précité est caractérisé en ce que la partie supérieure de 1a cavité communique avec l'atmosphère par la présence d'au moins un canal ouvert, ménagé dans la partie supérieure du brûleur.

Le canal ouvert permet un apport continu d'oxygène dans la partie supérieure de la cavité. Ainsi, après consommation complète du liquide combustible, la mèche séchée peut au contact des parois du brûleur si celles-ci sont trop chaudes, brûler avec combustion complète des constituants de la mèche et des dernières quantités de liquide combustible, avec production de CO₂ et H₂O sous forme gazeuse. On évite ainsi la production de particules de carbone susceptibles de boucher les pores du brûleur.

En outre, le canal permet une arrivée d'air frais qui accélère le refroidissement des parois intérieures de la cavité, de sorte que la combustion de la mèche s'arrête plus rapidement que dans le cas précédent.

Contrairement à ce qui était constaté dans le brûleur précité à pastille catalytique annulaire dont les mèches coaxiales charbonnaient rapidement au contact des parois de ladite pastille annulaire malgré la présence du trou axial recevant la mèche centrale, le canal ouvert mettant en communication la partie supérieure de la cavité avec l'atmosphère suffit, même s'il a un diamètre petit par rapport à celui de la cavité, à éviter le phénomène de charbonnement.

Il est ainsi possible de laisser le brûleur fonctionner jusqu'à consommation de tout le liquide combustible présent dans le flacon équipé dudit brûleur sans risque d'endommager ledit brûleur.

Suivant une version avantageuse de l'invention, ledit canal est aménagé sensiblement axialement et a, de préférence, un diamètre compris sensiblement entre le quart et la moitié du diamètre de la cavité.

Un autre aspect de l'invention concerne également un flacon à combustion catalytique, adapté à contenir un liquide combustible et à recevoir, au niveau de son goulot, un brûleur à combustion catalytique recevant une mèche trempant dans ledit liquide.

Suivant l'invention, ce flacon est caractérisé en ce qu'il est équipé d'un brûleur selon le premier aspect de l'invention.

D'autres particularités et avantages de la présente invention apparaîtront dans la description détaillée ci-après.

Aux dessins annexés, donnés uniquement à titre d'exemples non limitatifs :
- la figure 1 est une vue schématique en élévation d'un flacon équipé d'un brûleur à combustion catalytique selon un mode de réalisation de la présente invention ;
- la figure 2 est une vue schématique agrandie en coupe axiale du brûleur représenté à la figure 1 ;
- la figure 3 est une vue semblable à la figure 2 représentant un mode de réalisation d'un support du brûleur de la figure 2 ;
- la figure 4 est une vue semblable à la figure 2 représentant un mode de réalisation d'une embase adaptée à recevoir le support de la figure 3 ;
- la figure 5 est une vue de dessous du support de la figure 3 ;
- la figure 6 est une vue de dessous de l'embase de la figure 4 ;
- la figure 7 est une vue semblable à la figure 2 représentant un mode de réalisation d'une rallonge tubulaire du support de la figure 3 ;
- la figure 8 est une vue semblable à la figure 2 d'un autre mode de réalisation de la présente invention.

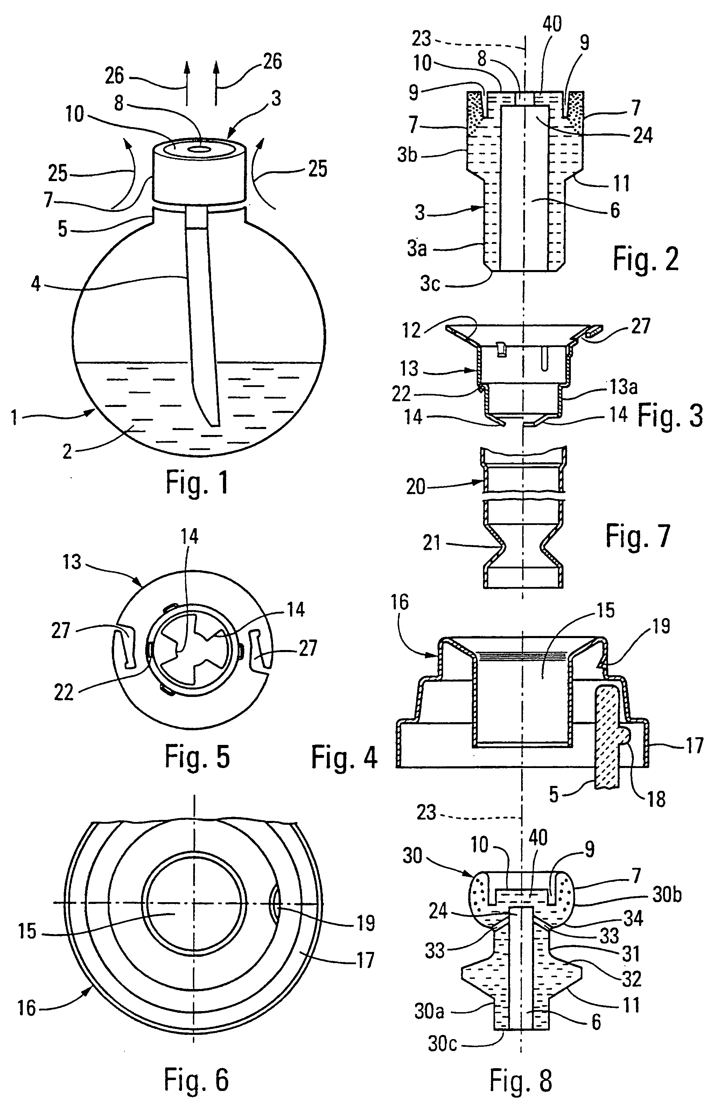

On a représenté à la figure 1 un flacon 1 à combustion catalytique adapté à contenir un liquide combustible 2 et à recevoir à sa partie supérieure un brûleur 3 à combustion catalytique recevant une mèche 4 trempant dans ledit liquide 2.

Le flacon 1 peut être un flacon de forme quelconque présentant un goulot 5 sur lequel est adapté le brûleur 3.

Le liquide combustible 2 est habituellement un alcool, qui est par exemple de l'alcool isopropylique, ou toute autre combustible liquide approprié compatible avec les règlements en vigueur. En particulier, ce combustible doit être tel que sa vaporisation et sa combustion catalytique ne dégagent pas d'odeur désagréable.

Le liquide combustible peut comprendre en outre une matière parfumée et/ou une matière active.

La mèche 4 est une mèche connue quelconque, par exemple une mèche en coton. La mèche peut également être une mèche en matière minérale, par exemple une mèche en fibres minérales.

Comme représenté en détail à la figure 2, le brûleur 3 à combustion catalytique est un brûleur en matière poreuse, par exemple à base de kaolin.

Le brûleur 3 comporte à sa partie inférieure 3a une cavité 6 sensiblement axiale adaptée à recevoir une mèche 4 destinée à amener au brûleur 3 un liquide combustible 2. La cavité 6, qui débouche à l'extrémité inférieure 3c du brûleur 3, s'étend axialement sur une grande partie de la dimension axiale du brûleur 3.

Le brûleur 3 comporte à sa partie supérieure 3b une zone périphérique annulaire 7 supportant un catalyseur, par exemple à base d'un métal appartenant au groupe VIII du tableau de classification périodique des éléments. La zone périphérique annulaire 7 entoure une zone centrale 40 sans catalyseur formant zone de vaporisation.

Suivant l'invention, le brûleur 3 est caractérisé en ce qu'il comporte, dans sa partie supérieure 3b, au moins un canal 8 ouvert, faisant communiquer la partie supérieure 24 de la cavité 6 avec l'atmosphère.

Dans l'exemple représenté, le canal 8 est ménagé sensiblement axialement, notamment pour des raisons esthétiques.

Ce canal pourrait très bien avoir une direction autre que la direction axiale, à condition de pouvoir amener de l'air frais dans la partie supérieure 24 de la cavité 6, sans gêner la combustion catalytique.

Le canal 8 a de préférence un diamètre compris sensiblement entre le quart et les trois quarts environ du diamètre de la cavité 6.

Ainsi, pour une cavité de diamètre intérieur 7 mm environ, le canal a de préférence un diamètre compris entre 2 et 3 mm.

Comme représenté à la figure 2, et de façon classique, le brûleur 3 présente une gorge annulaire 9 sensiblement axiale s'étendant depuis la surface supérieure 10 du brûleur 3 vers le bas suivant un diamètre supérieur à celui de la cavité 6.

On voit à la figure 2 que la gorge annulaire 9 s'étend axialement sur une distance supérieure à l'épaisseur de la paroi séparant la cavité 6 de la surface supérieure 10 du brûleur.

On sait que cette gorge 9 sépare nettement la zone périphérique 7 qui supporte le catalyseur, de la zone centrale 40 de la partie supérieure 3b.

Au contact de la zone périphérique 7 qui supporte le catalyseur, se produit la combustion catalytique du liquide combustible et la destruction catalytique des substances organiques gazeuses présentes dans l'atmosphère entourant le brûleur, comme schématisé par les flèches 25 à la figure 1. La zone 7 est, pendant le fonctionnement du brûleur, à une température de plusieurs centaines de degrés centigrades.

Dans la zone centrale 40, séparée de la zone périphérique 7 par la gorge annulaire 9, la température est nettement plus faible. Il se produit simplement une vaporisation du liquide combustible avec dispersion de la matière parfumée contenue dans ce liquide, comme schématisé par les flèches 26 à la figure 1.

Comme schématisé à la figure 2, le brûleur 3 présente un épaulement périphérique 11 séparant sa partie supérieure 3b de plus grand diamètre et sa partie inférieure 3a de diamètre réduit. L'épaulement 11 est reçu par un épaulement complémentaire 12 d'un support 13 entourant au moins la partie inférieure 3a du brûleur 3.

Le brûleur 3 peut être maintenu sur le support 13 par un étrier (non représenté) dont les extrémités passent dans les encoches 27 ménagées dans la paroi formant l'épaulement 12 du support 13.

Le brûleur 3 peut être maintenu sur son support 13 par tout autre moyen, par exemple par poinçonnage de la partie inférieure sensiblement cylindrique 13a du support 13 autour de la partie inférieure 3a du brûleur 3.

Dans l'exemple représenté à la figure 3, le support 13 a une longueur axiale sensiblement égale à la longueur axiale de la partie inférieure 3a du brûleur 3.

A sa partie inférieure, le support 13 présente plusieurs pattes 14 dirigées sensiblement radialement vers l'intérieur de façon à serrer et retenir la mèche 4 à l'intérieur de la cavité 6 du brûleur 3 en place sur le support 13.

Le support 13 peut être introduit directement à l'intérieur du goulot 5 du flacon 1.

Habituellement, le support 13 est introduit dans le trou central 15 d'une embase 16 adaptée à être fixée au goulot 5 du flacon 1. Comme schématisé à la figure 4, l'embase 16 présente, par exemple, une jupe inférieure 17 adaptée à être sertie autour d'un renflement annulaire, schématisé en 18 à la figure 4, dudit goulot 5.

On voit aux figures 4 et 6 que l'embase 16 représentée comporte au moins un trou 19 faisant communiquer l'intérieur du flacon 1 avec l'atmosphère. Dans cet exemple, le trou 19 est ménagé dans une paroi périphérique 20 placée au-dessus du goulot 5 et en communication directe avec l'intérieur du flacon 1.

Avantageusement, le support 13 s'étend vers le bas au-delà de l'extrémité inférieure 3c du brûleur 3.

Dans l'exemple représenté à la figure 7, le support 13 est prolongé vers le bas au-delà de l'extrémité inférieure 3c du brûleur 3, par une rallonge tubulaire 20 adaptée à s'emboîter sur la partie inférieure du support 13.

Dans cet exemple, la rallonge tubulaire 20 comprend au moins un tronçon présentant un rétrécissement 21 pour pincer la mèche 4 et limiter l'apport par la mèche, par capillarité, de liquide combustible vers le brûleur 3. De même, le support 13 comporte au moins un trou 22 faisant communiquer l'intérieur du flacon 1 avec l'atmosphère.

Le support 13 allongé ou muni de sa rallonge tubulaire 20 a pour principal effet d'inciter l'utilisateur du brûleur 3 à mettre en place parfaitement le support 13 et le brûleur 3 sur l'embase 16 selon l'axe commun 23 au goulot 5, à l'embase 16, à la rallonge 20, au support 13 et au brûleur 3. Ceci permet d'éviter la faute consistant à allumer un brûleur 3 alors que ce brûleur n'est pas dans la position correcte sur l'embase 16, ce qui fait que la flamme provoquée par la combustion du liquide combustible à la surface du brûleur peut s'étendre à la mèche jusqu'à l'intérieur du flacon 1 dans laquelle peut se trouver un mélange explosif d'air et de vapeur de liquide combustible.

L'ensemble plus lourd formé par le brûleur 3, le support 13, la rallonge tubulaire 20 et la mèche 4 a tendance à se mettre en place par lui-même sur l'embase 16. Dans le cas contraire, cet ensemble, s'il n'est pas introduit dans le trou central 15 de l'embase 16, a tendance à pendre complètement à l'extérieur du flacon, selon une position anormale qui incite l'utilisateur à remettre le tout dans la position axiale normale.

Les essais effectués par la demanderesse avec le brûleur perfectionné décrit ci-dessus et un flacon muni d'un tel brûleur posé sur un support 13 muni d'une rallonge 20 et engagé sur une embase 16 percée d'un trou 19, ont permis de vérifier que les perfectionnements correspondants produisent bien les résultats attendus.

Le canal 8 ménagé dans la partie supérieure 3b du brûleur 3 évite efficacement une combustion incomplète du liquide combustible et de la mèche lorsque le liquide combustible contenu dans le flacon a été complètement consommé. On évite ainsi toute production de particules de carbone susceptibles de boucher et d'endommager le brûleur 3. En outre, ce canal 8 facilite le refroidissement de la partie supérieure 3b du brûleur 3, de sorte que la consommation de liquide parfumé n'est pas augmentée.

La présence du canal 8 permet de plus d'utiliser dans le liquide combustible 2 des matières parfumées choisies dans des gammes plus variées que celles utilisables avec un brûleur classique dont elles doivent traverser les pores.

Il est ainsi possible d'utiliser des matières parfumées correspondant à des notes olfactives plus légères, hespéridées ou autres, par exemple des odeurs d'agrumes, notamment de fruits de la famille des citrus, qui peuvent se vaporiser directement en passant par le canal 8 sans passer par les pores du brûleur qui sont à une température, de l'ordre de 200°C, à laquelle elles seraient détruites.

De même, on peut utiliser des matières plus lourdes, par exemple des insecticides, qui peuvent se vaporiser directement par le canal 8 alors qu'elles risqueraient d'obstruer le brûleur en l'absence du canal 8.

Dans le mode de réalisation représenté à la figure 8, le brûleur 30 présente une cavité axiale 6 partant de son extrémité inférieure 30c jusqu'à proximité de sa paroi supérieure centrale 10 entourée par la gorge annulaire 9.

Dans cet exemple, la zone périphérique 7, supportant le catalyseur, de la partie supérieure 30b du brûleur 30, s'étend axialement au-dessus de la paroi 10.

Sous la zone périphérique 7, la partie inférieure 30a du brûleur 30 comprend successivement, dans le sens axial vers le bas, une première paroi sensiblement cylindrique 31 de plus petit diamètre qui se prolonge par une seconde paroi évasée 32 formant une collerette dont la surface périphérique inférieure forme l'épaulement 11 reçu dans l'épaulement complémentaire 12 du support 13.

La paroi périphérique 31 et la paroi périphérique 32 constituent également des surfaces de vaporisation du liquide combustible, en supplément de la zone centrale 40.

Comme représenté à la figure 8, la partie supérieure 24 de la cavité 6 est mise en communication avec l'atmosphère par plusieurs canaux 33, deux dans cet exemple, qui débouchent à l'extérieur à la base de l'épaulement 34 reliant la paroi 10 à la paroi 31.

Le brûleur 30 peut être adapté sur le goulot 5 du flacon 1 par des support et embase du type décrit ci-dessus ou d'un autre type.

## Revendications

1. Brûleur (3, 30) à combustion catalytique en matière poreuse, comportant une cavité (6) sensiblement axiale adaptée à recevoir une mèche (4) destinée à amener au brûleur (3, 30) un liquide combustible (2) qui pénètre dans les pores de ladite matière poreuse, ladite cavité (6) débouchant à l'extrémité inférieure (3c, 30c) du brûleur (3, 30) et étant séparée de la surface supérieure (10) du brûleur (3, 30) par une paroi, et ledit brûleur (3, 30) comportant une zone périphérique annulaire (7) supportant un catalyseur et entourant une zone centrale (40) sans catalyseur formant zone de vaporisation, la zone périphérique annulaire (7) et la zone centrale (40) étant situées dans la partie supérieure (3b, 30b) du brûleur (3, 30), **caractérisé en ce que** la partie supérieure (24) de la cavité (6) communique avec l'atmosphère par la présence d'au moins un canal (8, 33) ouvert, ménagé dans la partie supérieure (3b, 30b) du brûleur (3, 30).

2. Brûleur selon la revendication 1, **caractérisé en ce que** ledit canal (8) est ménagé sensiblement axialement.

3. Brûleur selon la revendication 1 ou 2, **caractérisé en ce que** ledit canal (8) a un diamètre compris sensiblement entre le quart et les trois quarts, de préférence entre le quart et la moitié, environ du diamètre de la cavité (6).

4. Brûleur selon la revendication 1, **caractérisé en ce que** chaque canal (33) est dirigé sensiblement radialement.

5. Brûleur selon l'une quelconque des revendications 1 à 4, **caractérisé en ce que** le brûleur (3, 30) comporte en outre une gorge annulaire (9) sensiblement axiale, s'étendant depuis la surface supérieure (10) du brûleur (3, 30) et séparant la zone périphérique annulaire (7) de la zone centrale (40).

6. Flacon (1) à combustion catalytique, adapté à contenir un liquide combustible (2) et à recevoir au niveau de son goulot (5) un brûleur (3, 30) à combustion catalytique recevant une mèche (4) trempant dans ledit liquide (2), **caractérisé en ce qu'**il est équipé d'un brûleur (3, 30) selon l'une quelconque des revendications précédentes.

7. Flacon selon la revendication 6, le brûleur (3, 30) reposant sur une embase (16) fixée au goulot (5) dudit flacon (1), **caractérisé en ce que** ladite embase (16) comporte au moins un trou (19) faisant communiquer l'intérieur du flacon (1) avec l'atmosphère.

8. Flacon selon la revendication 6 ou 7, le brûleur (3, 30) présentant un épaulement périphérique (11) séparant sa partie supérieure (3b, 30b) de plus grand diamètre et sa partie inférieure (3a, 30a), de diamètre réduit, cet épaulement (11) étant reçu par un épaulement complémentaire (12) d'un support (13) entourant au moins la partie inférieure (3a, 30a) du brûleur (3, 30), **caractérisé en ce que** le support (13) s'étend vers le bas au-delà de l'extrémité inférieure (3c, 30c) du brûleur (3, 30).

9. Flacon selon la revendication 8, **caractérisé en ce que** le support (13) est prolongé vers le bas, au-delà de l'extrémité inférieure (3c, 30c) du brûleur (3, 30), par une rallonge tubulaire (20).

10. Flacon selon la revendication 9, **caractérisé en ce que** la rallonge tubulaire (20) comprend au moins un tronçon présentant un rétrécissement (21) pour pincer la mèche (4) et limiter l'apport par la mèche (4), par capillarité, de liquide combustible (2) vers le brûleur (3, 30).

11. Flacon selon l'une quelconque des revendications 8 à 10, **caractérisé en ce que** le support (13) comporte au moins un trou (22) faisant communiquer l'intérieur du flacon (1) avec l'atmosphère.

## Claims

1. Catalytic burner (3, 30) made of porous material, comprising a roughly axial cavity (6) designed to receive a wick (4) intended to convey to the burner (3, 30) a combustible liquid (2) which enters the pores of the said porous material, the said cavity (6) opening at the lower end (3c, 30c) of the burner (3, 30) and being separated from the upper surface (10) of the burner (3, 30) by a wall, and the said burner (3, 30) comprising an annular peripheral region (7) supporting a catalyst and surrounding a central region (40) without catalyst which forms a vaporization region, the annular peripheral region (7) and the central region (40) being situated in the upper part (3b, 30b) of the burner (3, 30), **characterized in that** the upper part (24) of the cavity (6) communicates with the atmosphere via the presence of at least one open duct (8, 33) formed in the upper part (3b, 30b) of the burner (3, 30).

2. Burner according to Claim 1, **characterized in that** the said duct (8) is produced roughly axially.

3. Burner according to Claim 1 or 2, **characterized in that** the said duct (8) has a diameter roughly between a quarter and three quarters, preferably between about a quarter and half the diameter of the cavity (6).

4. Burner according to Claim 1, **characterized in that** each duct (33) is directed roughly radially.

5. Burner according to any one of Claims 1 to 4, **characterized in that** the burner (3, 30) further comprises a roughly axial annular groove (9) extending from the upper surface (10) of the burner (3, 30) and separating the annular peripheral region (7) from the central region (40).

6. Catalytic-combustion bottle (1), designed to contain a combustible liquid (2) and to receive, on its neck (5), a catalytic burner (3, 30) receiving a wick (4) dipped in the said liquid (2), **characterized in that** it is equipped with a burner (3, 30) according to any one of the preceding claims.

7. Bottle according to Claim 6, the burner (3, 30) resting on a stand (16) fixed to the neck (5) of the said bottle (1), **characterized in that** the said stand (16) has at least one hole (19) allowing the inside of the bottle (1) to communicate with the atmosphere.

8. Bottle according to Claim 6 or 7, the burner (3, 30) having a peripheral shoulder (11) separating its larger-diameter upper part (3b, 30b) and its smaller-diameter lower part (3a, 30a), this shoulder (11) being received by a complementary shoulder (12) of a support (13) surrounding at least the lower part (3a, 30a) of the burner (3, 30), **characterized in that** the support (13) extends downwards beyond the lower end (3c, 30c) of the burner (3, 30).

9. Bottle according to Claim 8, **characterized in that** the support (13) is extended downwards, beyond the lower end (3c, 30c) of the burner (3, 30), by a tubular extension (20).

10. Bottle according to Claim 9, **characterized in that** the tubular extension (20) comprises at least one portion having a narrowing (21) to grip the wick (4) and limit the supply by the wick (4) by capillarity of combustible liquid (2) to the burner (3, 30).

11. Bottle according to any one of Claims 8 to 10, **characterized in that** the support (13) comprises at least one hole (22) allowing the inside of the bottle (1) to communicate with the atmosphere.

## Patentansprüche

1. Brenner (3, 30) zur katalytischen Verbrennung, aus porösem Material, umfassen einen im wesentlichen axialen Hohlraum (6), der ausgelegt ist, um einen Docht aufzunehmen, der dazu vorgesehen ist, eine brennbare Flüssigkeit (2) zu dem Brenner (3, 30) zu führen, wobei dieses in die Poren des porösen Materials eindringt, wobei der Hohlraum (6) am unteren Ende (3c, 30c) des Brenners (3, 30) mündet und von der oberen Fläche (10) des Brenners (3, 30) durch eine Wandung getrennt ist, wobei der Brenner (3, 30) eine ringförmige periphere Zone (7) umfaßt, die einen Katalysator stützt und eine mittlere Zone (40) ohne Katalysator umgibt, die eine Verdampfungszone ausbildet, wobei die ringförmige periphere Zone (7) und die mittlere Zone (40) in dem oberen Abschnitt (3b, 30b) des Brenners (3, 30) angeordnet sind, **dadurch gekennzeichnet, daß** der obere Abschnitt (24) des Hohlraumes (6) mit der Atmosphäre in Verbindung steht mittels des Vorliegens von zumindest einem offenen Kanal (8, 33), ausgebildet in dem oberen Abschnitt (3b, 30b) des Brenners (3, 30).

2. Brenner nach Anspruch 1, **dadurch gekennzeichnet, daß** der Kanal (8) im wesentlichen axialwärts ausgebildet ist.

3. Brenner nach Anspruch 1 oder 2, **dadurch gekennzeichnet, daß** der Kanal (8) einen Durchmesser aufweist, im wesentlichen enthalten zwischen etwa dem Viertel und Dreiviertel, insbesondere bevorzugt zwischen dem Viertel und der Hälfte von etwa dem Durchmesser des Hohlraumes (6).

4. Brenner nach Anspruch 1, **dadurch gekennzeichnet, daß** jeder Kanal (33) im wesentlichen radialwärts ausgerichtet ist.

5. Brenner nach einem der Ansprüche 1 bis 4, **dadurch gekennzeichnet, daß** der Brenner (3, 30) ferner eine im wesentlichen axiale ringförmige Rinne (9) aufweist, die sich ausgehend von der oberen Fläche (10) des Brenners (30) erstreckt und die ringförmige periphere Zone (7) von der mittleren Zone (40) trennt.

6. Flacon zur katalytischen Verbrennung, ausgelegt zum Enthalten einer brennbaren Flüssigkeit (2) und zum Aufnehmen auf dem Niveau seines Halses (5) eines Brenners (3, 30) zur katalytischen Verbrennung, welcher einen Docht (4) aufnimmt, welcher in die Flüssigkeit (2) eingetaucht ist, **dadurch gekennzeichnet, daß** der Flacon mit einem Brenner (3, 30) nach einem der vorangegangenen Ansprüche ausgestattet ist.

7. Flacon nach Anspruch 6, bei welchem der Brenner (3, 30) an einem Sockel oder Ansatz (16) ruht, der an dem Hals (5) des Flacon (1) befestigt ist, **dadurch gekennzeichnet, daß** der Sockel oder Ansatz (16) zumindest ein Loch (19) umfaßt, welches das Innere des Flacon mit der Umgebung in Verbindung setzt.

8. Flacon nach Anspruch 6 oder 7, bei welchem der Brenner (3, 30) einen peripheren Absatz (11) aufweist, der den oberen Abschnitt (3b, 30b) mit größerem Durchmesser von dem unteren Abschnitt (3a, 30a) von kleinerem Durchmesser trennt, wobei der Absatz (11) von einem entsprechenden und komplementären Absatz (12) einer Stütze (13) aufgenommen wird, die zumindest den unteren Abschnitt (3a, 30a) des Brenners (3, 30) umgibt, **dadurch gekennzeichnet, daß** die Stütze (13) sich nach unten hin über das untere Ende (3c, 30c) des Brenners (3, 30) erstreckt.

9. Flacon nach Anspruch 8, **dadurch gekennzeichnet, daß** die Stütze (13) mittels eines tubusartigen Fortsatzes (20) über das untere Ende (3c, 30c) des Brenners (3, 30) hinaus nach unten fortgesetzt oder verlängert ist.

10. Flacon nach Anspruch 9, **dadurch gekennzeichnet, daß** der tubusartige Fortsatz (20) zumindest einen Abschnitt umfaßt, der eine Verjüngung (21) aufweist, um den Docht (4) einzuklemmen und die Speisung durch den Docht (4) mittels Kapillarwirkung an brennbarer Flüssigkeit (2) hin zu dem Brenner (3, 30) zu begrenzen.

11. Flacon nach einem der Ansprüche 8 bis 10, **dadurch gekennzeichnet, daß** die Stütze (3) zumindest ein Loch (22) umfaßt, welches das innere des Flacon (1) mit der Umgebung oder Atmosphäre in Verbindung setzt.
